# EUROPÄISCHE PATENTSCHRIFT

(11) **EP 3 456 573 B1**
(45) Veröffentlichungstag und Bekanntmachung des Hinweises auf die Patenterteilung: **05.01.2022**
(21) Anmeldenummer: 18186933.0
(22) Anmeldetag: 02.08.2018
(51) Int. Cl.: B60K 35/00

(54) **VERFAHREN UND VORRICHTUNG ZUM ANZEIGEN VON BESCHLEUNIGUNGEN VORAUSFAHRENDER FAHRZEUGE IN EINEM FAHRZEUG**
METHOD AND DEVICE FOR DISPLAYING ACCELERATIONS OF PRECEDING VEHICLES IN A VEHICLE
PROCÉDÉ ET DISPOSITIF D'AFFICHAGE D'ACCÉLÉRATIONS DE VÉHICULES PRÉCÉDENTS DANS UN VÉHICULE

(30) Priorität: 13.09.2017 DE 102017216215
(43) Veröffentlichungstag der Anmeldung: 20.03.2019
(73) Patentinhaber: VOLKSWAGEN AKTIENGESELLSCHAFT, 38440 Wolfsburg (DE)
(72) Erfinder: Quander, Nils, 38154 Köngislutter am Elm (DE)

(56) Entgegenhaltungen:
- DE-A1-102010 046 236
- DE-A1-102014 008 897
- US-A1- 2016 257 199

## Beschreibung

Die Erfindung betrifft ein Verfahren zum Anzeigen von Beschleunigungen vorausfahrender Fahrzeuge in einem Fahrzeug. Ferner betrifft die Erfindung eine Vorrichtung zum Anzeigen von Beschleunigungen vorausfahrender Fahrzeuge in einem Fahrzeug.

Der Trend zu höheren Fahrzeugen und der Abdunkelung von Fahrzeugscheiben erschwert es Fahrern in kleinen und niedrigen Fahrzeugen, den Überblick über die bestehende Verkehrslage, insbesondere bei einem hohen Verkehrsaufkommen, zu behalten. Der Weitblick und das Sichtfeld auf vorausfahrende Fahrzeuge sind dabei deutlich eingeschränkt. Es kann meist nur bis zu dem unmittelbar vorausfahrenden Fahrzeug geblickt werden. Es wird daher, insbesondere in Ballungsgebieten, in welchen der Verkehr sehr dicht ist, immer schwieriger, vorausschauend zu fahren.

Es sind eine Vielzahl von Fahrerassistenzsystemen bekannt, die den Fahrer dabei unterstützen, Kollisionen mit anderen Verkehrsteilnehmern zu vermeiden. Dabei greifen diese Fahrerassistenzsysteme aktiv in den Regelbetrieb des Fahrzeugs ein und bremsen dieses gegebenenfalls ab.

Die US 2016 / 257 199 A1 offenbart ein Fahrzeug-zu-Fahrzeug-Kommunikationssystem bzw. ein Verfahren, welche einen räumlich-zeitlichen Vorausblick ermöglichen. Ein nachfolgendes Fahrzeug mit einer Vorausschau-Funktion kann mit einem vorausfahrenden Fahrzeug kommunizieren. Das vorausfahrende Fahrzeug kann einen Abstand zu einem führenden Fahrzeug messen und diese Information durch Fahrzeug-zu-Fahrzeug-Kommunikation an das nachfolgende Fahrzeug weitergeben. Das nachfolgende Fahrzeug kann dann mittels seines Head-up-Displays einen Augmented-Reality-Indikator über dem vorausfahrenden Fahrzeug anzeigen, der angibt, wie weit das führende Fahrzeug vor dem vorausfahrenden Fahrzeug liegt. Innerhalb des Augmented-Reality-Indikators kann ein Symbol angezeigt werden, das das führende Fahrzeug repräsentiert. Bremsvorgänge des führenden Fahrzeugs können über den Augmented-Reality-Indikator an das nachfolgende Fahrzeug weitergegeben werden.

Weiterhin ist aus der DE 10 2014 008 897 A1 ein Verfahren zur Ermittlung eines voraussichtlichen Zeitpunkts für eine Kollision zwischen einem ersten und einem zweiten Kraftfahrzeug bekannt. Dabei werden von dem ersten Kraftfahrzeug Positionsdaten für das zweite Kraftfahrzeug erfasst. Hieraus und aus weiteren Bewegungsdaten wird eine zukünftige Trajektorie für das zweite Kraftfahrzeug bestimmt.

Weiterhin ist aus der DE 10 2010 046 236 A1 ein Verfahren zur Regelung der Längsbewegung eines Fahrzeugs bekannt. Dabei werden Abstände zu vorausfahrenden Fahrzeugen ermittelt. Es wird ein Soll-Wert für die momentane Beschleunigung des Fahrzeugs in Abhängigkeit von den ermittelten Abständen ermittelt. Die Beschleunigung des Fahrzeugs wird dann automatisch auf den momentanen Soll-Wert eingestellt.

Nachteilig an diesen Verfahren ist jedoch, dass sie den Fahrer nicht bei einem vorausschauenden Fahren unterstützen.

Der vorliegenden Erfindung liegt daher die Aufgabe zugrunde, ein Verfahren und eine Vorrichtung der eingangs genannten Art bereitzustellen, mittels welchen ein vorausschauendes Fahren ermöglicht wird.

Erfindungsgemäß wird diese Aufgabe durch ein Verfahren mit den Merkmalen des Anspruchs 1 und eine Vorrichtung mit den Merkmalen des Anspruchs 5 gelöst. Vorteilhafte Ausgestaltungen und Weiterbildungen ergeben sich aus den abhängigen Ansprüchen.

Bei dem erfindungsgemäßen Verfahren werden die vorausfahrenden Fahrzeuge erfasst.

Weiterhin werden Daten zur Beschleunigung der vorausfahrenden Fahrzeuge erfasst. Aus den Daten zur Beschleunigung werden erste vorausfahrende Fahrzeuge mit einer ersten Beschleunigung ermittelt, wobei die erste Beschleunigung eine negative Beschleunigung ist, deren Betrag größer oder gleich einem festgelegten Schwellwert ist. Weiterhin werden auf einer Anzeigefläche erste graphische Objekte erzeugt, wobei jedem ersten vorausfahrenden Fahrzeug ein erstes graphisches Objekt zugeordnet wird, welches anzeigt, dass das dem ersten graphischen Objekt zugeordnete erste vorausfahrende Fahrzeug die erste Beschleunigung aufweist.

Ein erstes vorausfahrendes Fahrzeug weist daher eine negative Beschleunigung auf. Das Fahrzeug verzögert. Für ein erstes vorausfahrendes Fahrzeug wird jedoch erfasst, dass der Betrag der Verzögerung größer als ein festgelegter Schwellwert ist. Es werden daher nicht für alle langsamer werdenden Fahrzeuge erste graphische Objekte erzeugt, sondern lediglich für die, deren negative Beschleunigung dem Betrag nach größer oder gleich dem Schwellwert ist. Dabei ist der Betrag der negativen Beschleunigung eines ersten Fahrzeugs insbesondere dann größer oder gleich dem Schwellwert, wenn das Fahrzeug aktiv durch das Aktivieren einer Fahrzeugbremse abgebremst wird. Das Fahrzeug führt einen Bremsvorgang aus. Einem nachfolgenden Fahrzeug werden solche Bremsvorgänge insbesondere durch das Aktivieren von Bremsleuchten am Fahrzeugheck angezeigt.

Es wird daher insbesondere ermittelt, dass die erste Beschleunigung von einem Bremsvorgang erzeugt wird, bei dem das erste Fahrzeug aktiv abgebremst wird. Die negative Beschleunigung ist dann eine Bremsverzögerung.

Weiterhin kann ein Fahrzeug auch dann eine negative Beschleunigung aufweisen, wenn es nicht durch das Betätigen eines Bremspedals abgebremst wird. Wird bei eingelegtem Gang der Fuß vom Gaspedal genommen, greift die sogenannte Motorbremse des Fahrzeugs. Das Fahrzeug wird langsamer, jedoch nicht aktiv abgebremst. Dabei hängt die Stärke der dadurch verursachten Verzögerung von dem Gang ab, in dem das Fahrzeug gerade fährt. Legt der Fahrer bei hoher Geschwindigkeit einen niedrigen Gang ein, wird das Fahrzeug stärker verzögert, als wenn der Fahrer bei hoher Geschwindigkeit lediglich seinen Fuß vom Gaspedal nimmt, den Gang jedoch nicht wechselt. Der Betrag der erzeugten negativen Beschleunigung kann daher auch im Fall der Motorbremse größer oder gleich dem Schwellwert sein. Die ersten graphischen Objekte können daher auch vorausfahrenden Fahrzeugen zugeordnet sein, die durch eine Motorbremse abgebremst werden. Ein weiterer Fall der Motorbremse tritt dabei auch bei der Rekuperation bei Elektrofahrzeugen auf.

Schließlich kann der Betrag einer negativen Beschleunigung eines ersten vorausfahrenden Fahrzeugs auch dann größer oder gleich dem festgelegten Schwellwert sein, wenn es mit einem Hindernis kollidiert. Die dabei entstehenden negativen Beschleunigungen hängen von der Geschwindigkeit des Fahrzeugs und der Geschwindigkeit und Verformbarkeit des Hindernisses ab. Bei solchen Kollisionen ist die Verzögerung in der Regel so stark, dass sie größer oder gleich dem festgelegten Schwellwert ist.

Der festgelegte Schwellwert liegt dabei insbesondere in einem Bereich von 0,2 m/s² bis 0,5 m/s². Bevorzugt liegt der festgelegte Schwellwert bei 0,3 m/s². Ein solch niedriger Schwellwert ist insbesondere im Stop-and-Go Verkehr vorteilhaft, da bereits dann erste graphische Objekte erzeugt werden, wenn vorausfahrende Fahrzeuge von einer relativ geringen Geschwindigkeit von ca. 5 km/h innerhalb von ca. 5 Sekunden abbremsen, um zum Stehen zu kommen.

Zudem wird ein Fahrzeug auch dann langsamer, wenn kein Gang eingelegt ist, und das Gaspedal nicht mehr betätigt wird. In diesem Fall rollt das Fahrzeug aus. Der Betrag der negativen Beschleunigung wird dabei in der Regel jedoch nicht größer oder gleich dem festgelegten Schwellwert sein.

Dem Fahrer des Fahrzeugs werden durch die ersten graphischen Objekte vorteilhafterweise vorausfahrende Objekte angezeigt, deren negative Beschleunigungen dazu führen, dass er selbst in absehbarer Zukunft sein Fahrzeug bremsen muss, um eine Kollision mit einem unmittelbar vorausfahrenden Fahrzeug zu vermeiden.

Es kann dabei vorkommen, dass der Fahrer des Fahrzeugs vorausfahrende Fahrzeuge nicht sehen kann, da sie von anderen vorausfahrenden Fahrzeugen, die sich näher an dem Fahrzeug befinden, verdeckt werden. Der Fahrer kann daher nicht unmittelbar erfassen, wenn verdeckte vorausfahrende Fahrzeuge aktiv bremsen. Der Fahrer kann dies erst dann erfassen, wenn das verdeckende vorausfahrende Fahrzeug bremst. Es werden daher erfindungsgemäß erste graphische Objekte auf der Anzeigefläche erzeugt, die anzeigen, dass das dem ersten graphischen Objekt zugeordnete Fahrzeug einen Bremsvorgang ausführt. Der Fahrer des Fahrzeugs kann dadurch erkennen, dass ein vorausfahrendes Fahrzeug bremst, auch wenn er dieses durch die Windschutzscheibe nicht oder nur schwer erfassen kann. Dadurch wird vorteilhafterweise ermöglicht, dass sich der Fahrer des Fahrzeugs frühzeitig darauf vorbereiten kann ebenfalls eine Bremsung vorzunehmen. Die Zeit, die einem Fahrer zur Verfügung steht, um sich darauf vorzubereiten selbst zu bremsen, kann durch die frühzeitige Anzeige, dass vorausfahrende Fahrzeuge bremsen, erheblich verlängert werden. Die Wahrscheinlichkeit für Kollisionen mit vorausfahrenden Fahrzeugen kann dadurch vorteilhafterweise verringert werden.

Eine Anzeige zum vorausschauenden Fahren kann zudem für den autonomen oder teilautonomen Fahrbetrieb verwendet werden, um die Akzeptanz für das autonome bzw. teilautonome Fahren seitens des Fahrers zu erhöhen. Die im autonom fahrenden Fahrzeug befindlichen Passagiere können dann entspannter die Fahrmanöver des Fahrzeugs nachvollziehen und dadurch ihr Vertrauen in das System stetig steigern. Denn die Anzeige bereitet die Fahrzeuginsassen vorteilhafterweise besser auf eine bevorstehende automatische Bremsung vor.

Erfindungsgemäß werden aus den Daten zur Beschleunigung zweite vorausfahrende Fahrzeuge mit einer zweiten Beschleunigung ermittelt, wobei die zweite Beschleunigung eine negative Beschleunigung ist, deren Betrag kleiner als der festgelegte Schwellwert ist, eine positive Beschleunigung ist oder null ist. Weiterhin werden dann auf der Anzeigefläche zweite graphische Objekte erzeugt, wobei jedem zweiten vorausfahrenden Fahrzeug ein zweites graphisches Objekt zugeordnet wird, welches anzeigt, dass das dem zweiten graphischen Objekt zugeordnete zweite vorausfahrende Fahrzeug die zweite Beschleunigung aufweist. Es wird dann vorteilhafterweise für jedes vorausfahrende Fahrzeug ein graphisches Objekt auf der Anzeigefläche erzeugt, welches ihm zugeordnet ist.

Es werden daher alle erfassten vorausfahrende Fahrzeuge klassifiziert. In welche Klasse ein Fahrzeug eingeteilt wird, hängt dabei von der für das Fahrzeug erfassten Beschleunigung ab.

Die Fahrzeuge mit der ersten Beschleunigung werden in eine erste Klasse und die Fahrzeuge mit der zweiten Beschleunigung in eine zweite Klasse eingeteilt. Weiterhin können die Fahrzeuge der zweiten Klasse nochmals in unterschiedliche Klassen eingeteilt werden. Die zweiten Fahrzeuge mit einer negativen Beschleunigung, deren Betrag kleiner als der Schwellwert ist, können in eine dritte Klasse eingeteilt werden. Die zweiten Fahrzeuge mit einer gleichbleibenden Geschwindigkeit, also einer Beschleunigung gleich null, können in eine vierte Klasse und/oder die zweiten Fahrzeuge mit einer positiven Beschleunigung können in eine fünfte Klasse eingeteilt werden. Es werden dann die zweiten graphischen Objekte ebenfalls nochmals unterteilt, so dass für vorausfahrende Fahrzeuge mit einer negativen Beschleunigung, deren Betrag kleiner als der Schwellwert ist, dritte graphische Objekte, für Fahrzeuge mit einer gleichbleibenden Beschleunigung vierte graphische Objekte und für Fahrzeuge mit einer positiven Beschleunigung fünfte graphische Objekte auf der Anzeigefläche erzeugt werden. Dadurch wird dem Fahrer des Fahrzeugs vorteilhafterweise angezeigt, welches vorausfahrende Fahrzeug welcher Klasse zugeteilt ist.

Insbesondere können die Positionen der vorausfahrenden Fahrzeuge relativ zueinander erfasst werden, wobei die ersten und/oder zweiten graphischen Objekte derart auf der Anzeigefläche angeordnet werden, dass die Positionen der ersten und/oder zweiten graphischen Objekte auf der Anzeigefläche die Positionen der ihnen zugeordneten vorausfahrenden Fahrzeuge relativ zueinander repräsentieren. Hierdurch wird es vorteilhafterweise ermöglicht, dass der Fahrer eindeutig zuordnen kann, an welcher Position sich ein bremsendes Fahrzeug befindet. Zudem kann der Fahrer die Positionen vorausfahrender Fahrzeuge, die von einem anderen vorausfahrenden Fahrzeug verdeckt werden, relativ zueinander angezeigt. Dadurch kann der Fahrer besser einschätzen, welches der Fahrzeuge einen Bremsvorgang ausführt.

Zudem kann der Abstand der vorausfahrenden Fahrzeuge zu dem Fahrzeug erfasst werden und die Abstände bei den entsprechenden graphischen Objekten angezeigt werden. Der Fahrer wird dann vorteilhafterweise durch eine optische Distanzanzeige unterstützt.

Weiterhin kann ein erstes Merkmal eines ersten graphischen Objekts von dem Betrag der Beschleunigung des dem ersten graphischen Objekt zugeordneten ersten Fahrzeugs abhängen und/oder das erste Merkmal eines zweiten graphischen Objekts kann von dem Betrag der Beschleunigung des dem zweiten graphischen Objekt zugeordneten zweiten Fahrzeugs abhängen. Hierdurch kann vom Fahrer insbesondere die Höhe der Bremsverzögerungen der ersten Fahrzeuge intuitiv erfasst werden. Insbesondere kann er dadurch vorteilhafterweise frühzeitig besser entscheiden, wie stark er selbst das Fahrzeug abbremsen muss, um eine Kollision mit einem vorausfahrenden Fahrzeug zu verhindern.

Das erste Merkmal ist dabei insbesondere die Größe des ersten und/oder zweiten graphischen Objekts. Insbesondere ist die Größe des ersten und/oder zweiten graphischen Objekts proportional zu dem erfassten Betrag der Beschleunigung. Je größer der erfasste Betrag eines vorausfahrenden Fahrzeugs ist, desto größer wird das ihm zugeordnete graphische Objekt auf der Anzeigefläche dargestellt. Dies gilt bevorzugt für die ersten graphischen Objekte, welche den ersten Fahrzeugen zugeordnet sind. Dadurch kann der Fahrer des Fahrzeugs insbesondere die Bremsverzögerungen der einzelnen Fahrzeuge gut einschätzen.

Weiterhin können sich die ersten graphischen Objekte von den zweiten graphischen Objekten in zumindest einem zweiten Merkmal unterscheiden. Das zweite Merkmal umfasst insbesondere die Farbe, die Form und/oder ein Füllungsmuster des ersten und/oder zweiten graphischen Objekts. Dabei können die ersten graphischen Objekte insbesondere rot und die zweiten graphischen Objekte grün eingefärbt sein. Weiterhin können auch die dritten, vierten und fünften graphischen Objekte durch das zweite Merkmal voneinander unterschieden werden. So können beispielsweise dritte graphische Objekte orange, vierte graphische Objekte dunkelblau und fünfte graphische Objekte grün eingefärbt werden. Insbesondere können die Farbe, die Form und/oder das Füllungsmuster miteinander kombiniert werden.

Insbesondere wird das zweite Merkmal verändert, wenn eine Veränderung der Beschleunigung erfasst wird. Fängt beispielsweise ein erstes Fahrzeug an, positiv zu beschleunigen, wird es zu einem zweiten Fahrzeug. Das erste graphische Objekt geht dann in ein zweites graphisches Objekt über.

In einer Ausgestaltung ist die Anzeigefläche Teil einer Sichtfeldanzeige, durch welche die vorausfahrenden Fahrzeuge sichtbar sind. Die ersten und/oder zweiten graphischen Objekte werden derart in das Sichtfeld des Fahrers des Fahrzeugs projiziert, dass die ersten und/oder zweiten graphischen Objekte die ihnen zugeordneten vorausfahrenden Fahrzeuge markieren. Die graphischen Objekte können beispielsweise als Pfeile ausgestaltet sein, die auf die ihnen zugeordneten vorausfahrenden Fahrzeuge zeigen. Dadurch werden die vorausfahrenden Fahrzeuge, die einem bremsenden Fahrzeug zugeordnet sind, vorteilhafterweise eindeutig für den Fahrer markiert. Die Pfeile können insbesondere als Teil einer Anzeige eines "augmented reality Displays" erzeugt werden.

Weiterhin werden insbesondere die vorausfahrenden Fahrzeuge erfasst, die sich auf derselben Fahrspur befinden wie das Fahrzeug. Zudem wird erfasst, dass ein unmittelbar vor dem Fahrzeug fahrendes Fahrzeug die Sicht auf zumindest einen Teil der Fahrzeuge, die vor dem unmittelbar vor dem Fahrzeug fahrenden Fahrzeug erfasst werden, zumindest größtenteils blockiert. Die zugeordneten ersten und/oder zweiten graphischen Objekte werden in einer räumlichen Anordnung auf der Anzeigefläche angezeigt, so dass die relativen Abstände der vorausfahrenden Fahrzeuge zu dem Fahrzeug aus der räumlichen Anzeige hervorgehen. Die räumliche Anordnung ist insbesondere dann vorteilhaft, wenn zur Anzeige die Sichtfeldanzeige verwendet wird, bei welcher die graphischen Objekte in eine gleiche Anzeigeebene auf die Anzeigefläche projiziert werden. Weist die Fahrspur einen geraden Spurverlauf auf, sind die Querpositionen bezüglich der Fahrtrichtung der vorausfahrenden Fahrzeuge im Wesentlichen gleich. Die den vorausfahrenden Fahrzeugen zugeordneten graphischen Objekte müssten dann an der im Wesentlichen gleichen Stelle auf der Anzeigefläche erzeugt werden, um die ihnen zugeordneten Fahrzeuge markieren zu können. In diesem Fall können sie vom Fahrer jedoch schwer voneinander unterschieden werden. Die graphischen Objekte werden daher beispielsweise derart angeordnet, dass das graphische Objekte, welches dem unmittelbar vor dem Fahrzeug fahrenden Fahrzeug zugeordnet ist, das graphische Objekt leicht überdeckt, welches dem Fahrzeug zugeordnet ist, welches wiederum vor diesem Fahrzeug fährt. Dieses graphische Objekt wiederum überdeckt das nächste graphische Objekt wieder leicht, welches dem davor fahrenden Fahrzeug zugeordnet ist. So kann der Fahrer insbesondere die relativen Abstände der vorausfahrenden Fahrzeuge zu seinem Fahrzeug einschätzen. Insbesondere kann der Fahrer dadurch intuitiv erfassen, welches der Fahrzeuge aus der Reihe an Fahrzeugen bremst.

Die Erfindung betrifft ferner eine Vorrichtung zum Anzeigen von Bremsvorgängen vorausfahrender Fahrzeuge in einem Fahrzeug. Die Vorrichtung umfasst eine Erfassungsvorrichtung, mittels welcher die vorausfahrenden Fahrzeuge, und Daten zur Beschleunigung der vorausfahrenden Fahrzeuge erfassbar sind. Weiterhin umfasst die Vorrichtung eine Ermittlungsvorrichtung, mittels welcher aus den Daten zur Beschleunigung erste vorausfahrende Fahrzeuge mit einer ersten Beschleunigung ermittelbar sind, wobei die erste Beschleunigung eine negative Beschleunigung ist, deren Betrag größer oder gleich einem festgelegten Schwellwert ist. Zudem umfasst die Vorrichtung eine Steuervorrichtung und eine Anzeigevorrichtung, die von der Steuervorrichtung derart ansteuerbar ist, dass auf einer Anzeigefläche der Anzeigevorrichtung erste graphische Objekte erzeugt werden, wobei jedem ersten vorausfahrenden Fahrzeug ein erstes graphisches Objekt zugeordnet wird, welches anzeigt, dass das dem ersten graphischen Objekt zugeordnete erste vorausfahrende Fahrzeug einen Bremsvorgang ausführt. Die Vorrichtung ist insbesondere dazu ausgestaltet, das erfindungsgemäße Verfahren auszuführen und weist daher alle Vorteile des Verfahrens auf.

Die Erfassungsvorrichtung umfasst insbesondere eine Kamera, einen Radar-, Ultraschall- und/oder Lasersensor und/oder eine Schnittstelle, welche zur Car-to-Car-Kommunikation ausgebildet ist. Zusätzlich oder alternativ kann die Erfassungsvorrichtung eine GPS-Vorrichtung umfassen. Es können dann die GPS-Signale aller Fahrzeuge erfasst und daraus deren Positionen kontinuierlich erfasst werden. Aus den Positionsveränderungen der Fahrzeuge können dann zusätzlich die Beschleunigungen der Fahrzeuge erfasst werden.

Mit einer herkömmlichen optischen Kamera ist dabei die Erfassung von verdeckten Fahrzeugen jedoch nur begrenzt möglich. Hierzu können jedoch Kameradaten anderer Fahrzeuge über eine Car-to-Car-Kommunikation genutzt werden. Besonders vorteilhaft hingegen ist die Verwendung eines Radar- und/oder Lasersensors, welche es ermöglichen, verdeckte Fahrzeuge zu erfassen. Insbesondere können Radarsensoren mit einer Arbeitsfrequenz von 77 GHz verwendet werden. Durch Mehrfachreflektionen, der Radarstrahlung insbesondere am Fahrbahnboden, können dann auch verdeckte Fahrzeuge erfasst werden. Insbesondere können auch die von den Radar-, Ultraschall- und/oder Lasersensoren erfassten Daten anderer Fahrzeuge über die Car-to-Car-Kommunikation an das Fahrzeug gesendet und zur Ermittlung der Beschleunigung der vorausfahrenden Fahrzeuge verwendet werden.

Die Anzeigevorrichtung kann dabei insbesondere eine Sichtfeldanzeige umfassen. Die Sichtfeldanzeige ist dabei insbesondere als Head-Up-Display ausgebildet, welches als "augmented reality Display" ausgeprägt sein kann. Dabei kann die Anzeigefläche entweder die Windschutzscheibe des Fahrzeugs selbst oder eine in der Windschutzscheibe angeordnete Anzeigefläche sein. Weitere Beispiele für Anzeigevorrichtungen, die zur Anzeige verwendet werden können, umfassen eine in der Mittelkonsole oder dem Kombinationsinstrument des Fahrzeugs angeordnete Anzeigevorrichtung.

Die Erfindung wird nun anhand von Ausführungsbeispielen mit Bezug zu den Zeichnungen erläutert.
- Figur 1: zeigt ein Fahrzeug mit einer erfindungsgemäßen Vorrichtung,
- Figur 2: zeigt ein erstes Beispiel für ein von dem erfindungsgemäßen Verfahren erzeugte Anzeige
- Figur 3: zeigt ein Flussdiagramm eines Ausführungsbeispiels des erfindungsgemäßen Verfahrens,
- Figur 4: zeigt ein zweites Beispiel für eine von dem erfindungsgemäßen Verfahren erzeugte Anzeige, und

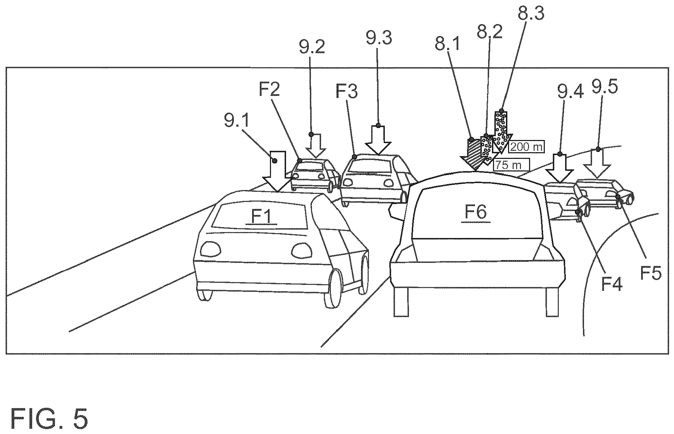

- Figur 5: zeigt ein drittes Beispiel für eine von dem erfindungsgemäßen Verfahren erzeugte Anzeige.

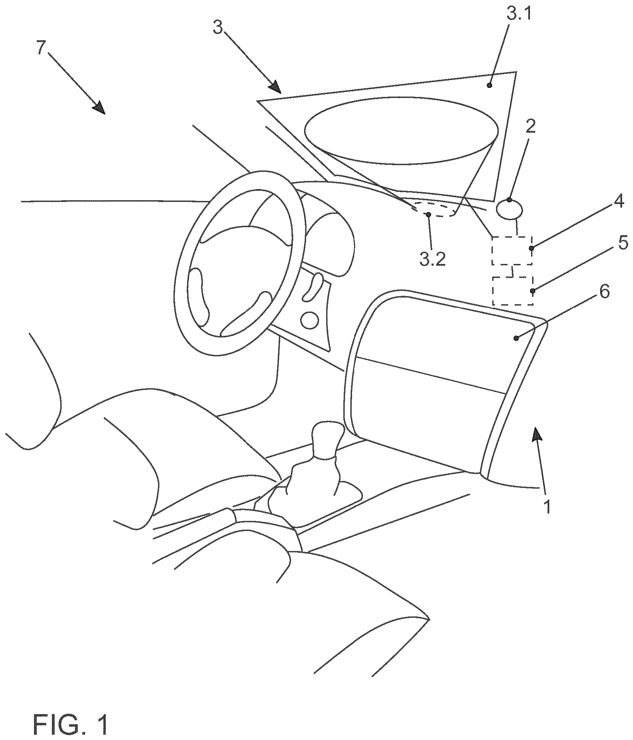

Mit Bezug zu Figur 1 wird ein Ausführungsbeispiel für eine erfindungsgemäße Vorrichtung 1 erläutert, die in einem Fahrzeug 7 angeordnet ist.

Die Vorrichtung 1 umfasst eine Erfassungsvorrichtung 2, die beispielsweise als Radarsensor ausgestaltet ist. Alternativ oder zusätzlich kann die Erfassungsvorrichtung 2 eine Kamera und/oder einen Lasersensor umfassen. Mittels der Erfassungsvorrichtung 2 können vorausfahrende Fahrzeuge erfasst werden. Weiterhin können mit der Erfassungsvorrichtung 2 Daten zur Beschleunigung und die Positionen der vorausfahrenden Fahrzeuge relativ zueinander und relativ zu dem Fahrzeug 7 erfasst werden.

Weiterhin kann die Erfassungsvorrichtung 2 alternativ oder zusätzlich eine Schnittstelle umfassen, mittels welcher das Fahrzeug 7 mit anderen am Verkehr teilnehmenden Fahrzeugen vernetzt ist. Dadurch können Schwarmdaten erfasst werden. Hierdurch ist es zudem möglich, die Reichweite, aus welcher die erfassten Daten stammen, erheblich zu vergrößern. Insbesondere können die vorausfahrenden Fahrzeuge ihre Daten zur Beschleunigung selbst an das Fahrzeug 7 übermitteln.

Die Daten zur Beschleunigung können innerhalb eines bestimmten Erfassungsbereiches erfasst werden, der beispielsweise von den technischen Gegebenheiten der Erfassungsvorrichtung 2 begrenzt ist. Alternativ kann der Erfassungsbereich jedoch auch vom Fahrer selbst oder ab Werk definiert sein. Dabei kann insbesondere der Erfassungsradius, innerhalb dessen vorausfahrende Fahrzeuge erfasst werden, auf einen Wert voreingestellt sein. Zudem kann auch eingestellt sein, dass lediglich vorausfahrende Fahrzeuge auf derselben Fahrspur erfasst werden.

Weiterhin können zwar alle vorausfahrenden Fahrzeuge mit den zugehörigen Daten zur Beschleunigung erfasst werden. Zur graphischen Aufbereitung können aber dann lediglich die Daten der auf derselben Fahrspur des Fahrzeugs 7 fahrenden Fahrzeuge verwendet werden.

Die Daten zur Beschleunigung umfassen dabei insbesondere den Betrag der Beschleunigung und das Vorzeichen der Beschleunigung, also ob ein Fahrzeug positiv oder negativ beschleunigt. Der Betrag der Beschleunigung kann zudem auch null sein.

Die Vorrichtung 1 umfasst zudem eine Sichtfeldanzeige 3, die wiederum eine Anzeigefläche 3.1, die in der Windschutzscheibe des Fahrzeugs 7 angeordnet ist, und einen Projektor 3.2, welcher Informationen und graphische Anzeigen auf die Anzeigefläche 3.1 projizieren kann, umfasst. Alternativ kann die Windschutzscheibe des Fahrzeugs 7 selbst als Anzeigefläche dienen, auf welche graphische Anzeigen mittels des Projektors 3.2 projiziert werden können. Insbesondere kann die Sichtfeldanzeige 3 als "augmented reality Display" ausgestaltet sein.

Weiterhin kann die Vorrichtung 1 eine weitere Anzeigevorrichtung 6 umfassen, die in der Mittelkonsole des Fahrzeugs 7 angeordnet ist. Eine weitere Anzeigevorrichtung kann zudem im Kombinationsinstrument des Fahrzeugs 7 angeordnet sein.

Die Vorrichtung 1 umfasst außerdem eine Steuervorrichtung 4, die mit dem Projektor 3.2 und/oder der Anzeigevorrichtung 6 verbunden ist. Die Steuervorrichtung 4 ist mit einer Ermittlungsvorrichtung 5 verbunden, welche aus den erfassten Daten zur Beschleunigung erste vorausfahrende Fahrzeuge ermittelt, welche eine negative Beschleunigung aufweisen, deren Betrag größer oder gleich einem festgelegten Schwellwert ist. Weiterhin ermittelt die Ermittlungsvorrichtung 5 aus den erfassten Daten zur Beschleunigung zweite vorausfahrende Fahrzeuge, die eine zweite Beschleunigung aufweisen. Die zweite Beschleunigung kann dabei auch negativ sein, wobei der Betrag der negativen Beschleunigung dann kleiner als der festgelegte Schwellwert ist. Weiterhin kann die zweite Beschleunigung positiv oder null sein. Die vorausfahrenden Fahrzeuge werden also klassifiziert, wobei die ersten Fahrzeuge in eine erste Klasse und die zweiten Fahrzeuge in eine zweite Klasse eingeteilt werden. Die Steuervorrichtung steuert dann die Anzeigevorrichtungen 3 und/oder 6 in Abhängigkeit von den Ermittlungsergebnissen an, so dass entsprechende graphische Anzeigen auf den Anzeigeflächen der Anzeigevorrichtungen 3 und/oder 6 erzeugt werden.

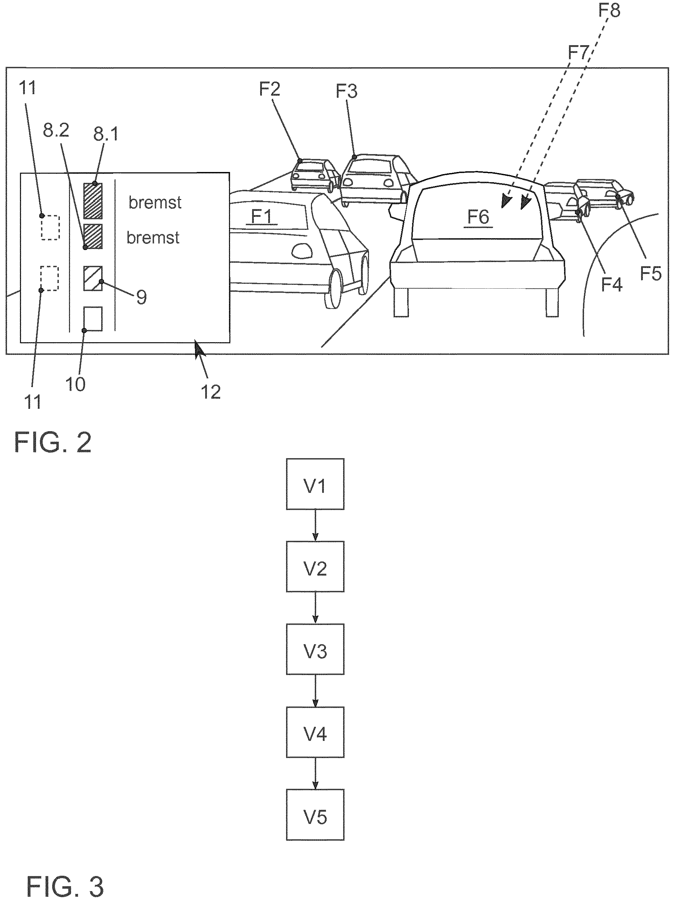

Mit Bezug zu den Figuren 2 und 3 wird ein erstes Ausführungsbeispiel für eine von dem erfindungsgemäßen Verfahren erzeugte Anzeige 12 sowie ein Ausführungsbeispiel für das erfindungsgemäße Verfahren erläutert. Die Anzeige 12 wird dabei mittels der Sichtfeldanzeige auf die in der Windschutzscheibe des Fahrzeugs 7 angeordnete Anzeigefläche 3.1 in das Sichtfeld des Fahrers des Fahrzeugs 7 projiziert.

Ausgangspunkt des Verfahrens ist dabei eine Verkehrssituation, bei welcher das Fahrzeug 7 hinter mehreren vorausfahrenden Fahrzeugen F1 bis F8 fährt. Dabei verdeckt das Fahrzeug F6 die Fahrzeuge F7 und F8, so dass diese vom Fahrer des Fahrzeugs 7 nicht oder nur schlecht gesehen werden können. Die Fahrzeuge F7 und F8 sind dabei durch gestrichelte Pfeile in der Figur 2 angedeutet.

In Schritt V1 des erfindungsgemäßen Verfahrens werden die vorausfahrenden Fahrzeuge F1 bis F8 von der Erfassungsvorrichtung 2 erfasst. Insbesondere werden auch die vom Fahrzeug F6 verdeckten Fahrzeuge F7 und F8 erfasst.

In Schritt V2 werden zudem Daten zu den Beschleunigungen der einzelnen vorausfahrenden Fahrzeuge F1 bis F8 erfasst. Dabei wird zunächst für jedes einzelne vorausfahrende Fahrzeug F1 bis F8 erfasst, ob es negativ, positiv oder nicht beschleunigt.

Wird erfasst, dass ein vorausfahrendes Fahrzeug F1 bis F8 negativ beschleunigt, wird in Schritt V3 des Verfahrens ermittelt, ob der Betrag der negativen Beschleunigung größer als ein festgelegter Schwellwert von beispielsweise 0,3 m/s² ist. Ist der Betrag der erfassten negativen Beschleunigung größer als der Schwellwert, wird ein vorausfahrendes Fahrzeug F1 bis F8 einer ersten Klasse zugeordnet. Die erste Klasse beinhaltet dabei im vorliegenden Ausführungsbeispiel die Fahrzeuge F7 und F8, die aktiv durch das Betätigen eines Bremspedals abgebremst werden. Die der ersten Klasse zugeordneten Fahrzeuge F7 und F8 werden durch aktives Bremsen verzögert und weisen daher eine Bremsverzögerung auf. Ein Bremsvorgang wird dabei insbesondere auch zusätzlich dadurch festgestellt, ob die Bremsleuchten eines Fahrzeugs F1 bis F8 leuchten. Dies ist jedoch von der Kamera des Fahrzeugs 7 nur für die nicht von dem Fahrzeug F6 verdeckten Fahrzeuge F1 bis F5 erfassbar.

Sind die Fahrzeuge 7 und F1 bis F8 hingegen miteinander vernetzt, kann beispielsweise auch auf Kameradaten der vorausfahrenden Fahrzeuge F1 bis F8 zugegriffen werden, so dass leuchtende Bremsleuchten der verdeckten Fahrzeuge F7 und F8 erfasst werden können. Weiterhin kann auf alle anderen Sensordaten der vernetzten Fahrzeuge F1 bis F8 zugegriffen werden und diese dazu verwendet werden, um zu ermitteln, ob ein Fahrzeug F1 bis F8 einen Bremsvorgang ausführt oder nicht.

Die anderen Fahrzeuge F1 bis F6 werden einer zweiten Klasse zugeordnet, die Fahrzeuge beinhaltet, deren Beschleunigungen nicht von einem Bremsvorgang erzeugt wird. Dabei können die Beschleunigungen der Fahrzeuge F1 bis F6 der zweiten Klasse negativ, der Betrag der negativen Beschleunigung aber größer als der Schwellwert sein, positiv oder null sein.

In Schritt V4 des Verfahrens werden die Positionen der vorausfahrenden Fahrzeuge F1 bis F8 relativ zueinander und relativ zu dem eigenen Fahrzeug 7 erfasst.

In Schritt V5 wird auf der Anzeigefläche 3.1 ein Anzeigefenster 12 erzeugt. In dem Anzeigefenster 12 werden dabei zunächst zwei schematische Fahrspuren S1 und S2 erzeugt, wobei die Fahrspur S1 die Fahrspur repräsentiert, auf welcher sich das Fahrzeug 7 befindet, und die Fahrspur S2 die links daneben liegende Fahrspur repräsentiert. Auf der schematischen Fahrspur S1 werden erste graphische Objekte 8.1 und 8.2, ein zweites graphisches Objekt 9 und ein weiteres graphisches Objekt 10 erzeugt. Die ersten graphischen Objekte 8.1 und 8.2 sind dabei den bremsenden Fahrzeugen F7 und F8 zugeordnet und sind rot eingefärbt. Die rote Färbung der ersten graphischen Objekte 8.1 und 8.2 hat dabei insbesondere eine Warnwirkung, so dass der Fahrer des Fahrzeugs 7 diesen beiden graphischen Objekten 8.1 und 8.2 besondere Aufmerksamkeit zukommen lässt, und schnell und intuitiv erfassen kann, dass die Fahrzeuge F7 und F8 bremsen. Zudem wird neben den graphischen Objekten 8.1 und 8.2 der Schriftzug "bremst" angezeigt. Dadurch wird dem Fahrer des Fahrzeugs 7 verdeutlicht, dass die Fahrzeuge F7 und F8 bremsen.

Weiterhin unterscheiden sich die ersten graphischen Objekte 8.1 und 8.2 insbesondere in ihrer Größe voneinander. Die Größe der graphischen Objekte 8.1 und 8.2 hängt dabei von der Größe des erfassten Betrags der Beschleunigung des einem graphischen Objekt 8.1 bzw. 8.2 zugeordneten Fahrzeugs F7 bzw. F8 ab. Im vorliegenden Beispiel ist der Betrag der negativen Beschleunigung des Fahrzeugs F8 größer als der Betrag für die negative Beschleunigung des Fahrzeugs F7. Das Fahrzeug F8 bremst daher stärker als das Fahrzeug F7.

Das zweite graphische Objekt 9 ist dem direkt vor dem Fahrzeug 7 fahrenden Fahrzeug F6 zugeordnet. Das zweite graphische Objekt 9 ist dunkelblau eingefärbt. Die dunkelblaue Färbung deutet dabei an, dass das vorausfahrende Fahrzeug F6 der zweiten Klasse zugeordnet ist. Beispielsweise beschleunigt das vorausfahrende Fahrzeug F6 nicht. Es bewegt sich dann mit gleichbleibender Geschwindigkeit fort. Hat der Fahrer des Fahrzeugs F6 bereits erfasst, dass die vor ihm fahrenden Fahrzeuge F7 und F8 bremsen, und er daraufhin zunächst das Gaspedal nicht mehr betätigt, wird das zweite graphische Objekt 9 orange eingefärbt. Dies deutet an, dass das Fahrzeug F6 zwar langsamer wird, aber noch nicht abgebremst wird. Zusätzlich kann dann neben dem graphischen Objekt 9 der Schriftzug "rollt" erscheinen.

Das weitere graphische Objekt 10 repräsentiert das eigene Fahrzeug 7 und ist grün eingefärbt. Die grüne Färbung des graphischen Objektes 10 deutet dabei an, dass das eigene Fahrzeug 7 positiv beschleunigt.

Die ersten graphischen Objekte 8.1 und 8.2 unterscheiden sich insbesondere von dem zweiten graphischen Objekt 9 und dem weiteren Objekt 10 in dem Merkmal Farbe. Alternativ oder zusätzlich können auch unterschiedliche Füllungsmuster oder Formen verwendet werden.

Weiterhin werden die graphischen Objekte 8.1, 8.2, 9 und 10 in Abhängigkeit von der ermittelten Position der ihnen zugeordneten Fahrzeuge F8, F7, F6 und 7 relativ zueinander angeordnet. Die graphischen Objekte 8.1, 8.2, 9 und 10 sind dabei in einer geraden Linie direkt untereinander angeordnet. Dabei ist an unterster Stelle das weitere graphische Objekt 10 angeordnet, welches das eigene Fahrzeug 7 repräsentiert. Direkt über dem weiteren graphischen Objekt 10 ist das zweite graphische Objekt 9 angeordnet, welches das unmittelbar vor dem Fahrzeug 7 fahrende Fahrzeug F6 repräsentiert. Wiederum direkt über dem graphischen Objekt 9 ist das graphische Objekt 8.2 angeordnet, welches das unmittelbar vor dem Fahrzeug F6 fahrende Fahrzeug F7 repräsentiert. Zuletzt ist direkt über dem graphischen Objekt 8.2 das graphische Objekt 8.1 angeordnet, welches dem unmittelbar vor dem Fahrzeug F7 fahrenden Fahrzeug F8 zugeordnet ist. Durch die relative Anordnung der graphischen Objekte 8.1, 8.2, 9 und 10 zueinander kann der Fahrer des Fahrzeugs 7 daher sofort erfassen, dass die vorausfahrenden Fahrzeuge F7 und F8 bremsen, obwohl sie von dem Fahrzeug F6 verdeckt werden. Dadurch kann sich der Fahrer des Fahrzeugs 7 auf ein notwendiges Bremsmanöver besser einstellen. Insbesondere kann die Zeit, die einem Fahrer zur Verfügung steht, um sich darauf vorzubereiten selbst zu bremsen, durch die frühzeitige Anzeige, dass die verdeckten vorausfahrenden Fahrzeuge F7 und F8 bremsen, erheblich verlängert werden. Die Wahrscheinlichkeit für eine Kollision mit dem vorausfahrenden Fahrzeug F6 kann dadurch vorteilhafterweise verringert werden.

Weiterhin werden in dem Anzeigefenster 12 auf der schematischen Fahrspur S2 graphische Objekte 11 dargestellt, welche den Fahrzeugen F1 und F2 zugeordnet sind. Die graphischen Objekte 11 werden dabei ausgegraut dargestellt und zeigen damit lediglich an, dass sich auf der Fahrspur links neben dem Fahrzeug 7 vorausfahrende Fahrzeuge F1 und F2 befinden.

Wird beispielsweise eine Spurwechselabsicht für das eigene Fahrzeug 7 erfasst, können die graphischen Objekte 11 je nach erfasster Beschleunigung für die ihnen zugeordneten Fahrzeuge F1 und F2 eingefärbt werden.

Den Fahrzeugen F4 und F5 wird kein graphisches Objekt in dem Anzeigefenster 12 zugeordnet. Um eine übersichtliche Anzeige zu gewährleisten, ist es im vorliegenden Fall ausreichend, lediglich die ersten drei vor dem Fahrzeug 7 fahrenden Fahrzeuge F6 - F8 auf derselben Fahrspur darzustellen.

Das Anzeigefeld 12 kann zusätzlich oder alternativ auf der Anzeigefläche der Anzeigevorrichtung 6 und/oder einer im Kombinationsinstrument angeordneten Anzeigefläche angezeigt werden.

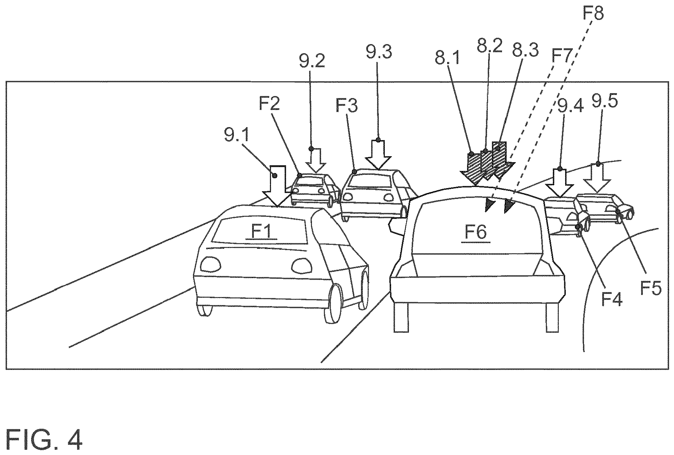

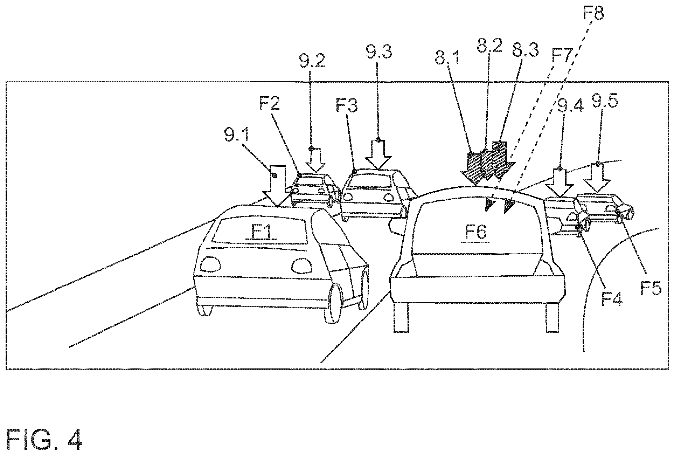

Mit Bezug zu Figur 4 wird ein weiteres Ausführungsbeispiel für eine Anzeige im Head-Up-Display 3.1 erläutert. Das Verfahren läuft dabei im Wesentlichen analog zu dem in Figur 3 gezeigten Verfahren ab.

Anstelle des Anzeigefensters 12 aus Figur 2 wird für jedes erfasste vorausfahrende Fahrzeug F1 bis F8 ein graphisches Objekt 8 oder 9 auf der Anzeigefläche 3.1 erzeugt.

Für die Fahrzeuge F6 bis F8 wird im Schritt V3 ermittelt, dass sie Bremsvorgänge ausführen.

Es wird zudem in Schritt V4 erfasst, dass die Fahrzeuge F4 bis F8 direkt voreinander auf derselben Fahrspur wie das Fahrzeug 7 fahren.

Weiterhin wird dabei erfasst, dass das Fahrzeug F6 die Sicht auf die Fahrzeuge F7 und F8 zumindest größtenteils verdeckt. Dies kann beispielsweise über einen Abgleich von Kameradaten mit erfassten Daten des Radarsensors 2 geschehen. Während die Kamera die Fahrzeuge F7 und F8 nicht erfassen kann, werden sie vom Radarsensor 2 wohl erfasst, so dass darauf geschlossen wird, dass die Fahrzeuge F7 und F8 verdeckt werden. Die Fahrzeuge F4 und F5, die sich bereits in einem Kurventeil derselben Fahrspur befinden, werden hingegen von beiden Sensoren erfasst.

Aufgrund dieser Ermittlungsergebnisse werden im Schritt V5 des Verfahrens graphische Objekte 8 und 9 auf der Anzeigefläche 3.1 erzeugt, wie sie in Figur 4 gezeigt sind.

Für jedes der Fahrzeuge F6 bis F8 wird ein erstes graphisches Objekt 8.1 bis 8.3 auf die Anzeigefläche 3.1 in der Windschutzscheibe des Fahrzeugs 7 projiziert, wobei dem Fahrzeug F6 das erste graphische Objekt 8.1, dem Fahrzeug F7 das erste graphische Objekt 8.2 und dem Fahrzeug F8 das erste graphische Objekt 8.3 zugeordnet wird. Die graphischen Objekte 8.1 bis 8.3 sind dabei rot eingefärbt, um anzuzeigen, dass die Fahrzeuge F6 bis F8 einen Bremsvorgang ausführen. Weiterhin ist der Pfeil 8.3 deutlich größer als die Pfeile 8.1 und 8.2. Dies bedeutet, dass das Fahrzeug F8 deutlich stärker bremst als die Fahrzeuge F6 und F7.

Weiterhin sind die ersten graphischen Objekte 8.1 bis 8.3 in einer räumlichen Anordnung voreinander angeordnet. Dabei verdeckt der Pfeil 8.1 den Pfeil 8.2 und der Pfeil 8.2 den Pfeil 8.3 zu einem geringen Anteil. Hierdurch kann der Fahrer zunächst erkennen, dass sich vor dem Fahrzeug F6 zwei weitere Fahrzeuge befinden. Zudem kann der Fahrer hieraus die relativen Abstände der Fahrzeuge F6 bis F8 zum eigenen Fahrzeug 7 erkennen. Das Fahrzeug F8 ist weiter vom Fahrzeug 7 entfernt als das Fahrzeug F7 und das Fahrzeug F7 weiter vom Fahrzeug 7 entfernt als das Fahrzeug F6.

Weiterhin kann der Fahrer aus der Anordnung erkennen, dass das Fahrzeug F8, welches das dritte Fahrzeug vor dem Fahrzeug 7 ist, deutlich stärker bremst als die Fahrzeuge F6 und F7. Hieraus kann der Fahrer schließen, dass die Bremsverzögerung der Fahrzeuge F6 und F7 in absehbarer Zeit voraussichtlich größer werden wird. Insbesondere kann der Fahrer sofort entsprechende Maßnahmen einleiten, um eine eventuelle Kollision mit dem Fahrzeug F6 zu verhindern.

Durch die räumliche Anordnung der Pfeile 8.1 bis 8.3 wird insbesondere verhindert, dass graphische Objekte, die bei der Anzeigefläche 3.1 auf die gleiche Anzeigeebene projiziert werden, sich gegenseitig gänzlich verdecken, wenn Fahrzeuge, insbesondere bei gerader Strecke, direkt voreinander fahren. Denn in diesem Fall sind die Querpositionen der Fahrzeuge F6 bis F8 bezüglich ihrer Fahrtrichtung in der Fahrspur im Wesentlichen gleich, so dass auch die graphischen Objekte 8.1 bis 8.3 auf die gleiche Position der Anzeigefläche 3.1 projiziert werden müssten. Bei der räumlichen Anordnung geben diese dann die relativen Abstände der vorausfahrenden Fahrzeuge F6 bis F8 zum eigenen Fahrzeug 7 an.

Für die Fahrzeuge F1 bis F5 wird hingegen ermittelt, dass sie keinen Bremsvorgang ausführen. Es wird für das Fahrzeug F1 das graphische Objekt 9.1, für das Fahrzeug F2 das graphische Objekt 9.2, für das Fahrzeug F3 das graphische Objekt 9.3, für das Fahrzeug F4 das graphische Objekt 9.4 und für das Fahrzeug F5 das graphische Objekt 9.5 auf die Anzeigefläche 3.1 projiziert.

Wird für eines der Fahrzeuge F6 bis F8 erfasst, dass es wieder positiv beschleunigt oder nicht mehr bremst, ändert sich die Farbe des zugehörigen ersten graphischen Objekts 8.1 bis 8.3 zu grün. Zudem wird die Position der ersten graphischen Objekte 8.1 bis 8.3 kontinuierlich an die Position der ihnen zugeordneten Fahrzeuge F6 bis F8 angepasst.

Mit Bezug zu Figur 4 wird ein viertes Ausführungsbeispiel für eine erzeugte Anzeige erläutert.

Die in Figur 4 gezeigte Anzeige entspricht dabei im Wesentlichen der in Figur 3 gezeigten Anzeige.

Hierbei wird für die Fahrzeuge F7 und F8 erfasst, dass der Betrag der negativen Beschleunigung kleiner als der Schwellwert ist. Die Fahrzeuge werden daher langsamer, jedoch nicht aktiv abgebremst. Die Fahrzeuge F7 und F8 rollen. In diesem Fall werden die Fahrzeuge F7 und F8 einer dritten Klasse zugeordnet, die beispielsweise eine Unterklasse der zweiten Klasse ist. Die graphischen Objekte 8.2 und 8.3 weisen dann wiederum eine andere Farbe, ein anderes Füllungsmuster und/oder eine andere Form auf wie das graphische Objekte 8.1, welches nach wie vor das Fahrzeug F6 repräsentiert, welches einen Bremsvorgang ausführt.

Zusätzlich werden die Abstände der vorausfahrenden Fahrzeuge F7 und F8 zu dem Fahrzeug 7 erfasst und bei den graphischen Objekten 8.2 und 8.3 angezeigt. Zudem kann bei den graphischen Objekten 8.2 und 8.3 der Schriftzug "rollt" angezeigt werden, während bei dem graphischen Objekt 8.1 der Schriftzug "bremst" angezeigt werden kann. Weiterhin kann auch dem graphischen Objekte 8.1 der Abstand zu dem Fahrzeug 7 angezeigt werden.

Das erste, zweite und dritte Ausführungsbeispiel können dabei miteinander kombiniert werden, so dass auch im ersten Ausführungsbeispiel für alle erfassten vorausfahrenden Fahrzeuge graphische Objekte erzeugt werden können.

Insbesondere können die Färbungen der graphischen Objekte des zweiten Ausführungsbeispiel weiter unterteilt werden, indem erfasst wird, ob die den graphischen Objekten zugeordneten Fahrzeuge einen Bremsvorgang ausführen, rollen, keine oder eine positive Beschleunigung aufweisen.

### Bezugszeichenliste

- 1: Vorrichtung
- 2: Erfassungsvorrichtung
- 3: Head-Up-Display
- 3.1: Anzeigefläche; Windschutzscheibe
- 3.2: Projektor
- 4: Steuervorrichtung
- 5: Ermittlungsvorrichtung
- 6: Anzeigevorrichtung
- 7: Fahrzeug
- 8, 8.1 - 8.3: erste graphische Objekte
- 9, 9.1 - 9.5: zweite graphische Objekte
- 10: weiteres graphisches Objekt
- 11: graphisches Objekt
- 12: Anzeigefenster
- F1 - F8: vorausfahrende Fahrzeuge
- V1 - V5: Verfahrensschritte

## Patentansprüche

1. Verfahren zum Anzeigen von Beschleunigungen vorausfahrender Fahrzeuge (F1 - F8) in einem Fahrzeug (7), bei dem
die vorausfahrenden Fahrzeuge (F1 - F8) erfasst werden,
Daten zur Beschleunigung der vorausfahrenden Fahrzeuge (F1 - F8) erfasst werden,
aus den Daten zur Beschleunigung erste vorausfahrende Fahrzeuge (F6 - F8) mit einer ersten Beschleunigung ermittelt werden, und
auf einer Anzeigefläche (3.1, 6) erste graphische Objekte (8.1 - 8.3) erzeugt werden, wobei jedem ersten vorausfahrenden Fahrzeug (F6 - F8) ein erstes graphisches Objekt (8.1 - 8.3) zugeordnet wird, welches anzeigt, dass das dem ersten graphischen Objekt (8.1 - 8.3) zugeordnete erste vorausfahrende Fahrzeug (F6 - F8) die erste Beschleunigung aufweist, wobei
die erste Beschleunigung eine negative Beschleunigung ist, deren Betrag größer oder gleich einem festgelegten Schwellwert ist, wobei
aus den Daten zur Beschleunigung zweite vorausfahrende Fahrzeuge (F1 - F5) mit einer zweiten Beschleunigung ermittelt werden, wobei die zweite Beschleunigung eine negative Beschleunigung ist, deren Betrag kleiner als der festgelegte Schwellwert ist, eine positive Beschleunigung ist oder null ist, und
auf der Anzeigefläche (3.1, 6) zweite graphische Objekte (9, 9.1 - 9.5) erzeugt werden, wobei jedem zweiten vorausfahrenden Fahrzeug (F1 - F5) ein zweites graphisches Objekt (9, 9.1 - 9.5) zugeordnet wird, welches anzeigt, dass das dem zweiten graphischen Objekt (9, 9.1 - 9.5) zugeordnete zweite vorausfahrende Fahrzeug (F1 - F5) die zweite Beschleunigung aufweist,
die Positionen der vorausfahrenden Fahrzeuge (F1 - F8) relativ zueinander erfasst werden, wobei die ersten (8.1 - 8.3) und/oder zweiten graphischen Objekte (9, 9.1 - 9.5) derart auf der Anzeigefläche (3.1, 6) angeordnet werden, dass die Positionen der ersten (8.1 - 8.3) und/oder zweiten graphischen Objekte (9, 9.1 - 9.5) auf der Anzeigefläche (3.1, 6) die Positionen der ihnen zugeordneten vorausfahrenden Fahrzeuge (F1 - F8) relativ zueinander repräsentieren,
wobei ein erstes Merkmal eines ersten graphischen Objekts (8.1 - 8.3) von dem Betrag der Beschleunigung des dem ersten graphischen Objekt (8.1 - 8.3) zugeordneten ersten Fahrzeugs (F6 - F8) und/oder das erste Merkmal eines zweiten graphischen Objekts (9, 9.1 - 9.5) von dem Betrag der Beschleunigung des dem zweiten graphischen Objekt (9, 9.1 - 9.5) zugeordneten zweiten Fahrzeugs (F1 - F5) abhängt,
wobei sich die ersten graphischen Objekte (8.1 - 8.3) von den zweiten graphischen Objekten (9.1 - 9.5) in zumindest einem zweiten Merkmal unterscheiden,
wobei das erste Merkmal die Größe des ersten (8.1 - 8.3) und/oder zweiten graphischen Objekts (9.1 - 9.5) ist und das zweite Merkmal die Farbe, die Form und/oder ein Füllungsmuster des ersten (8.1 - 8.3) und/oder zweiten graphischen Objekts (9.1 - 9.5) umfasst.

2. Verfahren nach Anspruch 1,
**dadurch gekennzeichnet, dass**
ermittelt wird, dass die erste Beschleunigung von einem Bremsvorgang erzeugt wird, bei dem das erste Fahrzeug (F6 - F8) aktiv abgebremst wird.

3. Verfahren nach einem der vorhergehenden Ansprüche,
**dadurch gekennzeichnet, dass**
die Anzeigefläche (3.1) Teil einer Sichtfeldanzeige ist, durch welche die vorausfahrenden Fahrzeuge (F1 - F8) sichtbar sind, und
die ersten (8.1 - 8.3) und/oder zweiten graphischen Objekte (9.1 - 9.3) derart in der Anzeigefläche (3.1) in das Sichtfeld des Fahrers des Fahrzeugs (7) projiziert werden, dass die ersten (8.1 - 8.3) und/oder zweiten graphischen Objekte (9.1 - 9.5) die ihnen zugeordneten vorausfahrenden Fahrzeuge (F1 - F8) markieren.

4. Verfahren nach Anspruch 3,
**dadurch gekennzeichnet, dass**
die vorausfahrenden Fahrzeuge (F6 - F8) erfasst werden, die sich auf derselben Fahrspur befinden wie das Fahrzeug (7),
erfasst wird, dass ein unmittelbar vor dem Fahrzeug (7) fahrendes Fahrzeug (F6) die Sicht auf zumindest einen Teil der Fahrzeuge (F7, F8), die vor dem unmittelbar vor dem Fahrzeug (7) fahrenden Fahrzeug (F6) erfasst werden, zumindest größtenteils blockiert, und
die zugeordneten ersten (8.1 - 8.3) und/oder zweiten graphischen Objekte (9.1 - 9.5) in einer räumlichen Anordnung auf der Anzeigefläche (3.1, 6) angezeigt werden, so dass die relativen Abstände der vorausfahrenden Fahrzeuge (F6 - F8) zu dem Fahrzeug (7) aus der räumlichen Anzeige hervorgehen.

5. Vorrichtung (1) zum Anzeigen von Beschleunigungen vorausfahrender Fahrzeuge (F1 - F8) in einem Fahrzeug (7) umfassend
eine Erfassungsvorrichtung (2), mittels welcher die vorausfahrenden Fahrzeuge (F1 - F8) und Daten zur Beschleunigung der vorausfahrenden Fahrzeuge (F1 - F8) erfassbar sind,
eine Ermittlungsvorrichtung (5), mittels welcher aus den Daten zur Beschleunigung erste vorausfahrende Fahrzeuge (F6 - F8) mit einer ersten Beschleunigung ermittelbar sind,
eine Steuervorrichtung (4) und
eine Anzeigevorrichtung (3, 6), die von der Steuervorrichtung (4) derart ansteuerbar ist, dass auf einer Anzeigefläche (3.1) der Anzeigevorrichtung (3) erste graphische Objekte (8.1 - 8.3) erzeugt werden, wobei jedem ersten vorausfahrenden Fahrzeug (F6 - F8) ein erstes graphisches Objekt (8.1 - 8.3) zugeordnet wird, welches anzeigt, dass das dem ersten graphischen Objekt (8.1 - 8.3) zugeordnete erste vorausfahrende Fahrzeug (F6 - F8) die erste Beschleunigung aufweist, wobei
die erste Beschleunigung eine negative Beschleunigung ist, deren Betrag größer oder gleich einem festgelegten Schwellwert ist, wobei
mittels der Ermittlungsvorrichtung (5) aus den Daten zur Beschleunigung zweite vorausfahrende Fahrzeuge (F1 - F5) mit einer zweiten Beschleunigung ermittelbar sind, wobei die zweite Beschleunigung eine negative Beschleunigung ist, deren Betrag kleiner als der festgelegte Schwellwert ist, eine positive Beschleunigung ist oder null ist, und
die Anzeigevorrichtung (3, 6) von der Steuervorrichtung (4) ferner derart ansteuerbar ist, dass auf der Anzeigefläche (3.1, 6) zweite graphische Objekte (9, 9.1 - 9.5) erzeugt werden, wobei jedem zweiten vorausfahrenden Fahrzeug (F1 - F5) ein zweites graphisches Objekt (9, 9.1 - 9.5) zugeordnet wird, welches anzeigt, dass das dem zweiten graphischen Objekt (9, 9.1 - 9.5) zugeordnete zweite vorausfahrende Fahrzeug (F1 - F5) die zweite Beschleunigung aufweist,
die Positionen der vorausfahrenden Fahrzeuge (F1 - F8) relativ zueinander erfasst werden, wobei die ersten (8.1 - 8.3) und/oder zweiten graphischen Objekte (9, 9.1 - 9.5) derart auf der Anzeigefläche (3.1, 6) angeordnet werden, dass die Positionen der ersten (8.1 - 8.3) und/oder zweiten graphischen Objekte (9, 9.1 - 9.5) auf der Anzeigefläche (3.1, 6) die Positionen der ihnen zugeordneten vorausfahrenden Fahrzeuge (F1 - F8) relativ zueinander repräsentieren,
wobei ein erstes Merkmal eines ersten graphischen Objekts (8.1 - 8.3) von dem Betrag der Beschleunigung des dem ersten graphischen Objekt (8.1 - 8.3) zugeordneten ersten Fahrzeugs (F6 - F8) und/oder das erste Merkmal eines zweiten graphischen Objekts (9, 9.1 - 9.5) von dem Betrag der Beschleunigung des dem zweiten graphischen Objekt (9, 9.1 - 9.5) zugeordneten zweiten Fahrzeugs (F1 - F5) abhängt,
wobei sich die ersten graphischen Objekte (8.1 - 8.3) von den zweiten graphischen Objekten (9.1 - 9.5) in zumindest einem zweiten Merkmal unterscheiden,
wobei das erste Merkmal die Größe des ersten (8.1 - 8.3) und/oder zweiten graphischen Objekts (9.1 - 9.5) ist und das zweite Merkmal die Farbe, die Form und/oder ein Füllungsmuster des ersten (8.1 - 8.3) und/oder zweiten graphischen Objekts (9.1 - 9.5) umfasst.

## Claims

1. Method for displaying accelerations of vehicles (F1 - F8) driving ahead of a vehicle (7) in said vehicle, in which
the vehicles (F1 - F8) driving ahead are captured,
data on the acceleration of the vehicles (F1 - F8) driving ahead are captured,
first vehicles (F6 - F8) driving ahead with a first acceleration are ascertained from the data on the acceleration, and
first graphical objects (8.1 - 8.3) are generated on a display surface (3.1, 6), wherein each first vehicle (F6 - F8) driving ahead is assigned a first graphical object (8.1 - 8.3) which indicates that the first vehicle (F6 - F8) driving ahead, which is assigned to the first graphical object (8.1 - 8.3), has the first acceleration, wherein
the first acceleration is a negative acceleration, the magnitude of which is greater than or equal to a specified threshold value, wherein
second vehicles (F1 - F5) driving ahead with a second acceleration are ascertained from the data on the acceleration, wherein the second acceleration is a negative acceleration, the magnitude of which is less than the specified threshold value, a positive acceleration or zero, and
second graphical objects (9, 9.1 - 9.5) are generated on the display surface (3.1, 6), wherein each second vehicle (F1 - F5) driving ahead is assigned a second graphical object (9, 9.1 - 9.5) which indicates that the second vehicle (F1 - F5) driving ahead, which is assigned to the second graphical object (9, 9.1 - 9.5), has the second acceleration,
the positions of the vehicles (F1 - F8) driving ahead relative to one another are captured, wherein the first graphical objects (8.1 - 8.3) and/or second graphical objects (9, 9.1 - 9.5) are arranged on the display surface (3.1, 6) in such a way that the positions of the first graphical objects (8.1 - 8.3) and/or second graphical objects (9, 9.1 - 9.5) on the display surface (3.1, 6) represent the positions of the vehicles (F1 - F8) driving ahead, which are assigned to said objects, relative to one another,
wherein a first feature of a first graphical object (8.1 - 8.3) depends on the magnitude of the acceleration of the first vehicle (F6 - F8) assigned to the first graphical object (8.1 - 8.3) and/or the first feature of a second graphical object (9, 9.1 - 9.5) depends on the magnitude of the acceleration of the second vehicle (F1 - F5) assigned to the second graphical object (9, 9.1 - 9.5),
wherein the first graphical objects (8.1 - 8.3) differ from the second graphical objects (9.1 - 9.5) in at least one second feature,
wherein the first feature is the size of the first graphical object (8.1 - 8.3) and/or second graphical object (9.1 - 9.5) and the second feature comprises the colour, the shape and/or a fill pattern of the first graphical object (8.1 - 8.3) and/or second graphical object (9.1 - 9.5).

2. Method according to Claim 1,
**characterized in that**
it is ascertained that the first acceleration is generated by a braking operation, in which the first vehicle (F6 - F8) is actively decelerated.

3. Method according to either of the preceding claims, **characterized in that**
the display surface (3.1) is part of a field-of-view display, by means of which the vehicles (F1 - F8) driving ahead are visible, and
the first graphical objects (8.1 - 8.3) and/or second graphical objects (9.1 - 9.3) are projected in the display surface (3.1) into the field of view of the driver of the vehicle (7) in such a way that the first graphical objects (8.1 - 8.3) and/or second graphical objects (9.1 - 9.5) mark the vehicles (F1 - F8) driving ahead, which are assigned to said objects.

4. Method according to Claim 3,
**characterized in that**
the vehicles (F6 - F8) driving ahead that are located on the same lane as the vehicle (7) are captured,
it is captured that a vehicle (F6) driving directly in front of the vehicle (7) blocks at least for the most part the view onto at least some of the vehicles (F7, F8) that are captured in front of the vehicle (F6) driving directly in front of the vehicle (7), and
the assigned first graphical objects (8.1 - 8.3) and/or second graphical objects (9.1 - 9.5) are displayed on the display surface (3.1, 6) in a spatial arrangement such that the distances of the vehicles (F6 - F8) driving ahead relative to the vehicle (7) are clearly discernible from the spatial display.

5. Apparatus (1) for displaying accelerations of vehicles (F1 - F8) driving ahead of a vehicle (7) in said vehicle, comprising
a capturing apparatus (2), by means of which the vehicles (F1 - F8) driving ahead and data on the acceleration of the vehicles (F1 - F8) driving ahead are capturable,
an ascertainment apparatus (5), by means of which first vehicles (F6 - F8) driving ahead with a first acceleration are ascertainable from the data on the acceleration,
a control apparatus (4) and
a display apparatus (3, 6), which is controllable by the control apparatus (4) in such a way that first graphical objects (8.1 - 8.3) are generated on a display surface (3.1) of the display apparatus (3), wherein each first vehicle (F6 - F8) driving ahead is assigned a first graphical object (8.1 - 8.3) which indicates that the first vehicle (F6 - F8) driving ahead, which is assigned to the first graphical object (8.1 - 8.3), has the first acceleration, wherein
the first acceleration is a negative acceleration, the magnitude of which is greater than or equal to a specified threshold value, wherein
second vehicles (F1 - F5) with a second acceleration are ascertainable from the data on the acceleration by means of the ascertainment apparatus (5), wherein the second acceleration is a negative acceleration, the magnitude of which is less than the specified threshold value, a positive acceleration or zero, and
the display apparatus (3, 6) is furthermore controllable by the control apparatus (4) in such a way that second graphical objects (9, 9.1 - 9.5) are generated on the display surface (3.1, 6), wherein each second vehicle (F1 - F5) driving ahead is assigned a second graphical object (9, 9.1 - 9.5) which indicates that the second vehicle (F1 - F5) driving ahead, which is assigned to the second graphical object (9, 9.1 - 9.5), has the second acceleration,
the positions of the vehicles (F1 - F8) driving ahead relative to one another are captured, wherein the first graphical objects (8.1 - 8.3) and/or second graphical objects (9, 9.1 - 9.5) are arranged on the display surface (3.1, 6) in such a way that the positions of the first graphical objects (8.1 - 8.3) and/or second graphical objects (9, 9.1 - 9.5) on the display surface (3.1, 6) represent the positions of the vehicles (F1 - F8) driving ahead, which are assigned to said objects, relative to one another,
wherein a first feature of a first graphical object (8.1 - 8.3) depends on the magnitude of the acceleration of the first vehicle (F6 - F8) assigned to the first graphical object (8.1 - 8.3) and/or the first feature of a second graphical object (9, 9.1 - 9.5) depends on the magnitude of the acceleration of the second vehicle (F1 - F5) assigned to the second graphical object (9, 9.1 - 9.5),
wherein the first graphical objects (8.1 - 8.3) differ from the second graphical objects (9.1 - 9.5) in at least one second feature,
wherein the first feature is the size of the first graphical object (8.1 - 8.3) and/or second graphical object (9.1 - 9.5) and the second feature comprises the colour, the shape and/or a fill pattern of the first graphical object (8.1 - 8.3) and/or second graphical object (9.1 - 9.5).

## Revendications

1. Procédé permettant d'afficher dans un véhicule (7) des accélérations de véhicules qui précèdent (F1 à F8), dans lequel
les véhicules qui précèdent (F1 à F8) sont détectés,
des données concernant l'accélération des véhicules qui précèdent (F1 à F8) sont détectées,
des premiers véhicules qui précèdent (F6 à F8) avec une première accélération sont déterminés à partir des données concernant l'accélération, et
des premiers objets graphiques (8.1 à 8.3) sont générés sur une surface d'affichage (3.1, 6), chaque premier véhicule qui précède (F6 à F8) étant associé à un premier objet graphique (8.1 à 8.3) qui indique que le premier véhicule qui précède (F6 à F8) associé au premier objet graphique (8.1 à 8.3) présente la première accélération, dans lequel
la première accélération est une accélération négative dont la grandeur est supérieure ou égale à une valeur seuil fixée, dans lequel
des deuxièmes véhicules qui précèdent (F1 à F5) avec une deuxième accélération sont déterminés à partir des données concernant l'accélération, la deuxième accélération étant une accélération négative dont la grandeur est inférieure à la valeur seuil fixée, est une accélération positive ou est égale à zéro, et
sur la surface d'affichage (3.1, 6), des deuxièmes objets graphiques (9, 9.1 à 9.5) sont générés, chaque deuxième véhicule qui précède (F1 à F5) étant associé à un deuxième objet graphique (9, 9.1 à 9.5) qui indique que le deuxième véhicule qui précède (F1 à F5) associé au deuxième objet graphique (9, 9.1 à 9.5) présente la deuxième accélération,
les positions des véhicules qui précèdent (F1 à F8) les uns par rapport aux autres sont détectées, les premiers (8.1 à 8.3) et/ou deuxièmes objets graphiques (9, 9.1 à 9.5) étant disposés sur la surface d'affichage (3.1, 6) de telle sorte que les positions des premiers (8.1 à 8.3) et/ou deuxièmes objets graphiques (9, 9.1 à 9.5) sur la surface d'affichage (3.1, 6) représentent les positions des véhicules qui précèdent (F1 à F8) qui leur sont associés les uns par rapport aux autres,
une première particularité d'un premier objet graphique (8.1 à 8.3) dépendant de la grandeur de l'accélération du premier véhicule (F6 à F8) associé au premier objet graphique (8.1 à 8.3) et/ou la première particularité d'un deuxième objet graphique (9, 9.1 à 9.5) dépendant de la grandeur de l'accélération du deuxième véhicule (F1 à F5) associé au deuxième objet graphique (9, 9.1 à 9.5),
les premiers objets graphiques (8.1 à 8.3) étant différents des deuxièmes objets graphiques (9.1 à 9.5) par au moins une deuxième particularité,
la première particularité étant la taille du premier (8.1 à 8.3) et/ou deuxième objet graphique (9.1 à 9.5) et la deuxième particularité comprenant la couleur, la forme et/ou un motif de remplissage des premiers (8.1 à 8.3) et/ou deuxièmes objets graphiques (9.1 à 9.5).

2. Procédé selon la revendication 1, **caractérisé en ce qu'**il est déterminé que la première accélération est générée par un processus de freinage dans lequel le premier véhicule (F6 à F8) est freiné activement.

3. Procédé selon l'une quelconque des revendications précédentes, **caractérisé en ce que**
la surface d'affichage (3.1) fait partie d'un affichage de champ de vision par lequel les véhicules qui précèdent (F1 à F8) sont visibles, et
les premiers (8.1 à 8.3) et/ou deuxièmes objets graphiques (9.1 à 9.3) sont projetés sur la surface d'affichage (3.1) dans le champ de vision du conducteur du véhicule (7) de telle sorte que les premiers (8.1 à 8.3) et/ou deuxièmes objets graphiques (9.1 à 9.5) marquent les véhicules qui précèdent (F1 à F8) qui leur sont associés.

4. Procédé selon la revendication 3, **caractérisé en ce que**
les véhicules qui précèdent (F6 à F8) qui se trouvent sur la même voie de circulation que le véhicule (7) sont détectés,
il est détecté qu'un véhicule (F6) roulant directement devant le véhicule (7) bloque au moins en majeure partie la vue sur au moins une partie des véhicules (F7, F8) sont détectés devant le véhicule (F6) qui roule directement devant le véhicule (7), et
les premiers (8.1 à 8.3) et/ou deuxièmes objets graphiques (9.1 à 9.5) associés sont affichés dans une disposition spatiale sur la surface d'affichage (3.1, 6) de sorte que les distances relatives des véhicules qui précèdent (F6 à F8) par rapport au véhicule (7) ressortent de l'affichage spatial.

5. Dispositif (1) permettant d'afficher dans un véhicule (7) des accélérations de véhicules qui précèdent (F1 à F8), comprenant
un dispositif de détection (2) qui permet de détecter les véhicules qui précèdent (F1 à F8) et des données concernant l'accélération des véhicules qui précèdent (F1 à F8),
un dispositif de détermination (5) qui permet de déterminer à partir des données concernant l'accélération des premiers véhicules qui précèdent (F6 à F8) avec une première accélération,
un dispositif de commande (4), et
un dispositif d'affichage (3, 6) qui peut être piloté par le dispositif de commande (4) de telle sorte que des premiers objets graphiques (8.1 à 8.3) sont générés sur une surface d'affichage (3.1) du dispositif d'affichage (3), chaque premier véhicule qui précède (F6 à F8) étant associé à un premier objet graphique (8.1 à 8.3) qui indique que le premier véhicule qui précède (F6 à F8) associé au premier objet graphique (8.1 à 8.3) présente la première accélération, dans lequel
la première accélération est une accélération négative dont la grandeur est supérieure ou égale à une valeur seuil fixée, dans lequel
le dispositif de détermination (5) permet de déterminer à partir des données concernant l'accélération un deuxième véhicule qui précède (F1 à F5) avec une deuxième accélération, la deuxième accélération étant une accélération négative dont la grandeur est inférieure à la valeur seuil fixée, est une accélération positive ou est égale à zéro, et
le dispositif d'affichage (3, 6) peut en outre être piloté par le dispositif de commande (4) de telle sorte que des deuxièmes objets graphiques (9, 9.1 à 9.5) sont générés sur la surface d'affichage (3.1, 6), chaque deuxième véhicule qui précède (F1 à F5) étant associé à un deuxième objet graphique (9, 9.1 à 9.5) qui indique que le deuxième véhicule qui précède (F1 à F5) associé au deuxième objet graphique (9, 9.1 à 9.5) présente la deuxième accélération,
les positions des véhicules qui précèdent (F1 à F8) les uns par rapport aux autres sont détectées, les premiers (8.1 à 8.3) et/ou deuxièmes objets graphiques (9, 9.1 à 9.5) étant disposés sur la surface d'affichage (3.1, 6) de telle sorte que les positions des premiers (8.1 à 8.3) et/ou deuxièmes objets graphiques (9, 9.1 à 9.5) sur la surface d'affichage (3.1, 6) représentent les positions des véhicules qui précèdent (F1 à F8) les uns par rapport aux autres,
une première particularité d'un premier objet graphique (8.1 à 8.3) dépendant de la grandeur de l'accélération du premier véhicule (F6 à F8) associé au premier objet graphique (8.1 à 8.3), et/ou la première particularité d'un deuxième objet graphique (9, 9.1 à 9.5) dépendant de la grandeur de l'accélération du deuxième véhicule (F1 à F5) associé au deuxième objet graphique (9, 9.1 à 9.5),
les premiers objets graphiques (8.1 à 8.3) étant différents des deuxièmes objets graphiques (9.1 à 9.5) par au moins une deuxième particularité,
la première particularité étant la taille du premier (8.1 à 8.3) et/ou deuxième objet graphique (9.1 à 9.5), et la deuxième particularité comprenant la couleur, la forme et/ou un motif de remplissage des premiers (8.1 à 8.3) et/ou deuxièmes objets graphiques (9.1 à 9.5).
